# EUROPEAN PATENT SPECIFICATION

(11) **EP 3 679 104 B1**
(45) Date of publication and mention of the grant of the patent: **09.11.2022**
(21) Application number: 18755345.8
(22) Date of filing: 17.07.2018
(51) Int. Cl.: C09J 133/04

(54) **WATER-BASED PRESSURE SENSITIVE ADHESIVE COMPOSITIONS AND METHODS OF MAKING SAME**
WASSERBASIERTE DRUCKEMPFINDLICHE KLEBSTOFFZUSAMMENSETZUNGEN UND VERFAHREN ZUR HERSTELLUNG DAVON
COMPOSITIONS ADHÉSIVES AQUEUSES SENSIBLES À LA PRESSION ET PROCÉDÉS POUR LES FABRIQUER

(30) Priority: 05.09.2017 US 201762554278 P
(43) Date of publication of application: 15.07.2020
(73) Proprietor: Rohm and Haas Company, Collegeville, PA 19426 (US)
(72) Inventor: YADAV, Vinita, Collegeville, PA 19426 (US); ELDREDGE, Josephine, Collegeville, PA 19426 (US); GRIFFITH, JR., William B., Collegeville, PA 19426 (US)
(74) Representative: Boult Wade Tennant LLP
(86) International application number: PCT/US2018/042423
(87) International publication number: WO 2019/050626

(56) References cited:
- WO-A1-2016/160250
- CN-A- 102 040 930
- CN-A- 105 694 772
- JP-A- H04 304 281
- US-A- 6 147 165

## Description

### Reference to Related Applications

The present application claims the benefit of U.S. Provisional Application No. 62/554,278, filed on September 5, 2017.

### Field of the Disclosure

The instant disclosure relates to pressure sensitive adhesive compositions. More particularly, the disclosure relates to water-based pressure sensitive adhesive compositions with improved adhesion and/or cohesion over a wide range of temperatures, and methods of making the same.

### Background and Summary of the Disclosure

Adhesive compositions are useful for a wide variety of purposes. One particularly useful subset of adhesive compositions is water-based pressure sensitive adhesives. The use of water-based pressure sensitive adhesives in different end-use applications is generally known. For instance, water-based pressure sensitive adhesives can be used with labels, tapes, decals, bandages, decorative and protective sheets, and a wide variety of other products. As used in the art, the term "pressure sensitive adhesive" designates a material comprising one or more polymer compositions which, when dried, is aggressively and permanently tacky at room temperature. Further, the term "water-based" indicates that the pressure sensitive adhesive is manufactured with an aqueous carrier. A typical water-based pressure sensitive adhesive will firmly adhere to a variety of dissimilar surfaces upon mere contact without the need of more than finger or hand-applied pressure.

JP-A-H-04 304 281 relates to a self-adhesive label or self-adhesive sticker which comprises a monomer composition consisting of 52.5 wt.% 2- ethylhexyl acrylate, 10 wt.% n-butyl acrylate, 10 wt.% methyl methacrylate, 2 4wt.% vinyl acetate, 3 wt.% 2-hydroxyethyl methacrylate, and 0.5 wt.% acrylic acid which is copolymerized in the presence of 40 pts.wt. water, 0.2 pts.wt. sodium lauryl sulfate, 0.4 pts.wt. sodium sulfosuccinate, 0.3 pts.wt. potassium persulfate, and 0.03 pts.wt. n-dodecylmercaptan at 80 deg.C for 6hr to prepare an aqueous emulsion.

CN-A-105 694 772 relates to an acrylate emulsion pressure-sensitive adhesive (PSA) composition. The composition can be applied to high-grade labels, protection films or adhesive tapes and comprises 1) 0.1 to 2% of a self-made special emulsifier for a pressure-sensitive adhesive, wherein the emulsifier is of a special structure; 2) 80 to 95% of soft monomer (for example, butyl acrylate (BA), ethylhexyl acrylate (EHA) or a mixture of BA and EHA); 3) 0 to 5% of hard monomer (for example, methyl methacrylate (MMA), acrylonitrile (AN) or a mixture of MMA and AN); and 4) 0 to 5% of functional monomer (for example, acrylic acid (AA), methacrylic acid (MAA), hydroxyethyl acrylate (HEA), hydroxyethyl methacrylate (HEMA) or a mixture of the above-mentioned functional monomers).

CN-A-102 040 930 relates to a pressure-sensitive adhesive for PET (Polyester) adhesive tapes and a preparation method thereof. The preparation method comprises the following steps of: uniformly mixing 10 to 20% butyl acrylate, 15 to 30% of ethyl hexyl acrylate, 0.5 to 2% of acrylic acid, 2 to 5% methyl methacrylate, 2 to 5% vinyl acetate, 0.5 to 2% methacrylate-2-hydroxyethyl ester, 20 to 30% toluene and 20 to 30% ethyl acetate; heating to 80 to 85 °C in a reaction kettle, and then adding benzoyl peroxide 1 to 3 times in a heat holding process, wherein the heat holding time is 2 to 10h; and finally, adding tackifying resin as required on adhesiveness.

WO-A-2016/160250 relates to a method comprising: a) dispersing a first monomer mixture comprising least one least monomer, the first monomer mixture having a total glass transition temperature (Tg) in the range of from -10°C to -65°C with a surfactant and an initiator in an aqueous medium; b) when the first monomer mixture is completely dispersed, adding a second monomer mixture comprising at least one monomer, the second monomer mixture having a Tg at least 20°C greater than the Tg of the first monomer mixture, to the aqueous medium; c) when the second monomer mixture is completely dispersed, adding a third monomer mixture comprising at least one monomer, the third monomer mixture having a Tg in the range of from -25°C to 50°C; and d) forming a polymer with the first, second, and third monomer mixtures.

US-A-6,147,165 relates to pressure-sensitive adhesive compositions. The compositions comprise polymer particles prepared by emulsion polymerization of at least one monomer mixture. The monomer mixture comprises at least one alkyl acrylate, the alkyl group of which has from about 4 to 12 carbon atoms, preferably in an amount of from about 73% to 90% by weight, at least one unsaturated carboxylic acid containing from about 3 to 5 carbon atoms, preferably in an amount of from about 2% to 12% by weight, and at least one hard monomer, preferably present in an amount of from about 5% to 15% by weight. The particles have a mean diameter of about 300 nm or less, as determined by laser light scattering.

Two properties recognized by the pressure sensitive adhesives industry are the adhesion (e.g., initial tack to a surface or adhesive force after a certain dwell time) and the cohesion (e.g., resistance to shear) of these polymer compositions. Attempts to improve the adhesive properties of pressure sensitive adhesives, such as by the addition of a tackifier to increase the glass transition temperature and decrease the modulus of the polymer composition, tend to reduce the resistance to shear, thereby promoting shear failure. The adhesive properties of water-based pressure sensitive adhesives are particularly important when the adhesives are to be used at various temperatures (e.g., room temperature and lower temperatures).

Therefore, water-based pressure sensitive adhesive compositions with improved adhesion and/or cohesion over a wide range of temperatures, and methods of making same, are desirable.

Water-based pressure sensitive adhesive compositions are disclosed comprising an acrylic copolymer formed from a monomer mixture. The monomer mixture comprises, based on the total weight of monomers in the monomer mixture, (a) from 60 to 80 percent by weight 2-ethylhexyl acrylate, (b) from 10 to 30 percent by weight butyl acrylate, (c) from 3 to 7 percent by weight methyl methacrylate, (d) from 0.1 to 3 percent by weight styrene, (e) from 0.1 to 1 percent by weight (meth)acrylic acid, wherein the acrylic copolymer has an acid content of less than 1 percent by weight, based on the total weight of the monomers in the monomer mixture.

In some embodiments, the water-based pressure sensitive adhesive compositions further comprise a thickener, a defoamer, a wetting agent, a mechanical stabilizer, a pigment, a filler, a freeze-thaw agent, a neutralizing agent, a plasticizer, a tackifier, an adhesion promoter, and combinations thereof. In some embodiments, the water-based pressure sensitive adhesive compositions further comprise an acid selected from the group consisting of (meth)acrylic acid, itaconic acid, maleic acid, carboxylic acid, and combinations thereof. In some embodiments, the acrylic copolymer has a glass transition temperature of from -55 to - 45°C.

Further, water-based pressure sensitive adhesive compositions an acrylic copolymer comprising, in a polymerized form a monomer having a relatively-low glass transition temperature of less than 0°C, a monomer having a relatively-high glass transition temperature of not less than 100°C, wherein the acrylic copolymer has an acid content of less than 1 percent by weight, based on the total weight of the monomers forming the acrylic copolymer.

Methods for preparing water-based pressure sensitive adhesive compositions are also disclosed. The method comprises preparing a monomer emulsion by dispersing a monomer mixture and a surfactant in an aqueous medium, the monomer mixture, based on the total weight of monomers in the monomer mixture, (a) from 60 to 80 percent by weight 2-ethylhexyl acrylate, (b) from 10 to 30 percent by weight butyl acrylate, (c) from 3 to 7 percent by weight methyl methacrylate, (d) from 0.1 to 3 percent by weight styrene, and (e) from 0.1 to 1 percent by weight (meth)acrylic acid, and introducing an initiator to the monomer emulsion, thereby polymerizing the monomer mixture to form an acrylic copolymer suitable for use in a pressure sensitive adhesive composition, wherein the acrylic copolymer has an acid content of less than 1 percent by weight, based on the total weight of the monomers in the monomer mixture.

### Detailed Description of the Disclosure

The instant disclosure relates to water-based pressure sensitive adhesive compositions and methods of making same. The water-based pressure sensitive adhesive compositions disclosed herein exhibit improved adhesion and/or cohesion over a wide range of temperatures, as detailed in the Examples below.

In some embodiments, the acrylic copolymer is formed via radical polymerization, e.g., emulsion polymerization. The end result is an acrylic emulsion including a dispersion of acrylic copolymer particles in the aqueous medium, the polymer particles comprising constituent units each being derived from a particular monomer in a monomer mixture which is fed to a reactor over a period of time and polymerized. As used herein, "copolymer" refers to a polymer in which two or more different types of monomers are joined in the same polymer chain.

In some embodiments, preparation of the adhesive compositions by emulsion polymerization takes place by initially charging an aqueous phase to a polymerization reactor and then feeding in the monomer mixture to be polymerized. The aqueous initial charge typically includes, in addition to water, a salt. In some embodiments, examples of suitable surfactants for use according this disclosure include, but are not limited to, cationic surfactants, anionic surfactants, zwitterionic surfactants, non-ionic surfactants, and combinations thereof

Before beginning the feed of the monomer mixture, the aqueous initial charge is heated to a temperature in the range of from 30 to 110°C. Once the desired temperature is reached, the monomer mixture is gradually fed to the polymerization reactor over a period of time in the presence of a free-radical polymerization initiator.

In some embodiments, the initiator can be either a thermal initiator or a redox system initiator. Example of thermal initiators include, but are not limited to, sodium persulfate and ammonium persulfate. Where the initiator is a redox system initiator, the reducing agent can be, for example, an ascorbic acid, a sulfoxylate, or an erythorbic acid, while the oxidating agent can be, for example, a peroxide or a persulfate. In some embodiments, the amount of initiator used is less than 0.9 weight percent, based on the total weight of the monomers in the monomer mixture.

In some embodiments, a chain transfer is added during the monomer mixture feeding to control the molecular weight of the produced acrylic copolymer. Examples of chain transfer agents which may be used include long chain alkyl mercaptans such as t-dodecyl mercaptans, methyl 3-mercaptopropionate ("MMP"), alcohols such as isopropanol, isobutanol, lauryl alcohol or t-octyl alcohol, carbon tetrachloride, tetrachloroethylene and trichloro-bromoethane. In some embodiments, the chain transfer agent is methyl-3-mercaptopropionate. In some embodiments, the chain transfer agent is added after about 15 percent by weight, or about 20 percent by weight, or about 25 percent by weight, of the monomer mixture has been fed to the reactor for polymerization.

In some embodiments, additional components can be added during feeding of the monomer mixture. For instance, surfactant (in addition to surfactant in the initial aqueous charge, if present) can be added during the monomer mixture feeding. In some embodiments, the additional surfactant can be added after about 30 percent by weight, or about 35 percent by weight, or about 44 percent by weight, of the monomer mixture has been fed to the reactor for polymerization. The surfactant can be added to, *inter alia,* control the particle size distribution of the acrylic copolymer particles. In some embodiments, about 5 to 15 percent by weight of the acrylic copolymer particles produced via polymerization have a weight average diameter of 70 to 150 nm, or 80 to 100 nm, with the remainder of the acrylic copolymer particles having a weight average diameter of 300 to 700 nm, or 350 to 450 nm.

In some embodiments, the monomer mixture comprises a monomer having a relatively-low glass transition temperature and a monomer having a relatively-high glass transition temperature. In some embodiments, the monomer having a relatively-low glass transition temperature has a glass transition temperature (or "T_{g}") of less than or equal to -0°C as measured by Differential Scanning Calorimeter with heating rate of 10°C/min. In some embodiments, the T_{g} of the monomer having a relatively-low glass transition temperature is less than 0°C, such as from -100 to 0°C, or from -75 to -25°C, or from -55 to -45°C. Examples of suitable monomers having relatively-low glass transition temperatures include, but are not limited to, 2-ethylhexyl acrylate, butyl acrylate, isooctyl acrylate and combinations thereof. In some embodiments, the T_{g} of the monomer having a relatively-high glass transition temperature is greater than 20°C, or from 20 to 150°C, or from 75 to 125°C, or from 100 to 115°C. Examples of suitable monomers having relatively-high glass transition temperatures include, but are not limited to, styrene, methyl methacrylate, acrylic acid, and combinations thereof. In some embodiments, the monomer having a relatively-high glass transition temperature is an acid selected from the group consisting of acrylic acid, methacrylic acid, itaconic acid, maleic acid, carboxylic acid, and combinations thereof.

The monomer mixture comprises, based on the total weight of monomers in the monomer mixture, (a) from 60 to 80 percent by weight, or from 70 to 75 percent by weight, 2-ethylhexyl acrylate, (b) from 10 to 30 percent by weight, or from 15 to 25 percent by weight, butyl acrylate, (c) from 3 to 7 percent by weight, or from 5 to 6 percent by weight, methyl methacrylate, (d) from 0.1 to 3 percent by weight, or from 0.5 to 1.5 percent by weight, styrene, (e) from 0.1 to 1 percent by weight, or 0.4 to 0.8 percent by weight, or from 0.4 to 0.6 percent by weight, (meth)acrylic acid.

The acrylic copolymer has a total acid content of less than 1 percent by weight, or less than 0.75 percent by weight, or less than 0.5 percent by weight, based on the total weight of the monomers in the monomer mixture.

In some embodiments, water-based pressure sensitive adhesive composition does not comprise ethyl acrylate. In some embodiments, water-based pressure sensitive adhesive composition does not comprise vinyl acetate. In some embodiments, water-based pressure sensitive adhesive composition does not comprise α-methyl styrene. In some embodiments, water-based pressure sensitive adhesive composition does not comprise any of ethyl acrylate, vinyl acetate, or α-methyl styrene. In some embodiments, water-based pressure sensitive adhesive composition does not comprise a crosslinking agent.

In some embodiments, the acrylic copolymer has a glass transition temperature (or "T_{g}") of less than or equal to -10°C as measured by Differential Scanning Calorimeter with heating rate of 10°C/min. In some embodiments, the Tg of the acrylic emulsion is from -70 to -10°C, or from -60 to -30°C, or from -55 to -45°C.

In some embodiments, the water-based pressure sensitive adhesive composition may further include, optionally, one or more additives. Examples of the one or more additives include, but are not limited to, a thickener, a defoamer, a wetting agent, a mechanical stabilizer, a pigment, a filler, a freeze-thaw agent, a neutralizing agent, a plasticizer, a tackifier, an adhesion promoter, and combinations thereof.

The water-based pressure sensitive adhesive composition may comprise 0 to 5 percent by weight of a thickener, based on the total weight of the adhesive composition. All individual values and subranges from 0 to 5 percent by weight are included herein and disclosed herein. For example, the wt% of the neutralizing agent can be from a lower limit of 0, 0.5, or 1 percent by weight to an upper limit of 1, 3, or 5 percent by weight. Example thickeners include, but are not limited to, ACRYSOL^{™}, UCAR^{™} and CELOSIZE^{™} which are commercially available from The Dow Chemical Company, Midland, Michigan.

The water-based pressure sensitive adhesive composition may comprise 0 to 2 percent by weight of a neutralizing agent, based on the total weight of the adhesive composition. All individual values and subranges from 0 to 2 percent by weight are included herein and disclosed herein. For example, the wt% of the neutralizing agent can be from a lower limit of 0, 0.3, or 0.5 percent by weight to an upper limit of 0.5, 1, or 2 percent by weight. Neutralizing agents are typically used to control pH to provide stability to the formulated pressure sensitive adhesive composition. Examples of the neutralizing agent include, but are not limited to, aqueous ammonia, aqueous amines, and other aqueous inorganic bases.

The water-based pressure sensitive adhesive composition may comprise less than 50 percent by weight of a tackifier, based on the total weight of the adhesive composition. All individual values and subranges from less than 50 percent by weight are included herein and disclosed herein. For example, the content of the tackifier can be from a lower limit of 0, 0.1, 0.2, 0.3, 0.5, 1, 2, 3, 4, or 5 percent by weight to an upper limit of 10, 20, 30, 40, or 50 percent by weight. Examples of the tackifier include, but are not limited to, rosin resins including rosin acid and/or rosin ester obtained by esterifying rosin acid with alcohols or an epoxy compound and/or its mixture, non-hydrogenated aliphatic C₅ resins, hydrogenated aliphatic C₅ resins, aromatic modified C₅ resins, terpene resins, hydrogenated C₉ resins, and combinations thereof.

The water-based pressure sensitive adhesive composition may comprise less than 5 percent by weight of an adhesion promoter, based on the total weight of the adhesive composition. All individual values and subranges from less than 5 percent by weight are included herein and disclosed herein. For example, the wt% of the adhesion promoter can be from a lower limit of 0, 0.1, 0.2, 0.3, 0.5, 1, 2, 3, or 4 percent by weight to an upper limit of 0.1, 0.2, 0.3, 0.5, 1, 2, 3, 4, 5 percent by weight.

### Examples of the Disclosure

The present disclosure will now be described in further detail by discussing Illustrative Examples and Comparative Examples (collectively "the Examples"). However, the scope of the present disclosure is not, of course, limited to the Illustrative Examples.

### Acrylic Copolymer Preparation

The acrylic copolymers used in the Examples are prepared according to the following procedure. A five liter, four-neck reactor equipped with a condenser, a mechanical stirrer, a temperature-controlled thermocouple and inlets for initiators and monomers, is fed with 480 g of deionized water and heated to 91°C under a gentle nitrogen flow. In a separate container, a monomer emulsion is prepared by mixing 307 g of deionized water, and about 2,200 grams of a monomer mixture emulsion comprising 50% aqueous sodium hydroxide, 30% aqueous solution of disodium ethoxylated alcohol half-ester of sulfosuccinic acid, and 23% aqueous solution of sodium dodecylbenzene sulfonate, acrylic acid ("AA"), styrene ("STY), 2-ethylhexyl acrylate ("EHA"), butyl acrylate ("BA"), and methyl methacrylate ("MMA"), according to the formulations identified in Table 1.

**Table 1: Monomer Mixture Feed**

| Compositions (wt% actives based on total monomer) | | | | | |
|---|---|---|---|---|---|
| | IE1 | IE2 | IE3 | CE1 | CE2 |
| 2-Ethylhexyl acrylate | 73 | 73 | 73 | 73 | 73 |
| n-Butyl acrylate | 20 | 20 | 20 | 20 | 20 |
| Methyl methacrylate | 5.5 | 5.6 | 5.4 | 5 | 5 |
| Styrene | 1 | 1 | 1 | 1 | 1 |
| Acrylic acid | 0.5 | 0.4 | 0.6 | 1 | 1 |
| Sodium hydroxide | 0.01 | 0.01 | 0.01 | 0.02 | 0.02 |
| POLYSTEP^{™} A-16-22 | 0.25 | 0.25 | 0.25 | 0.25 | 0.25 |
| AEROSOL^{™} A-102 | 0.45 | 0.45 | 0.45 | 0.45 | 0.45 |

The reactor contents are then heated to about 91°C and a solution of a mixture of 9.8 grams of sodium persulfate and 0.86 grams of sodium carbonate in 52 grams of deionized water and 73 grams of a 30.2% solids latex having a weight average particle diameter of 100 nm (commonly known as a "seed" or "preform seed") is added into the reactor. Immediately after these additions, the monomer mixture emulsion is fed into the reactor.

When 24% of the monomer mixture emulsion has been added to the reactor, 0.98 grams of methyl-3-mercaptopropionate ("MMP") in 20 grams of deionized water is added to the monomer pre-emulsion. When 44% of the monomer mixture emulsion has been added to the reactor, 24 grams of a 23% aqueous solution of sodium dodecylbenzene sulfonate in 36 grams of deionized water is added to the reactor. Upon completion of the addition of the monomer mixture emulsion to the reactor, 0.018 grams of ferrous sulfate heptahydrate and 0.073 grams of a 14% aqueous solution of copper nitrate in 16 grams deionized water is added to the reactor. The reactor contents are gradually cooled, and un-polymerized monomers are reduced by the gradual addition of 12.3 grams 70% aqueous t-butyl hydroperoxide in 52 grams of deionized water and 6.8 grams sodium sulfoxylate formaldehyde in 74 grams deionized water. 15.8 grams of 30% aqueous ammonia in 16 grams of deionized water is then added to raise the pH of the emulsion.

The emulsions are then formulated by mixing in 0.7 % AEROSOL^{™} OT-75, available from Cytec Solvay Group, and pH adjusted to about 8.0 with the addition of 14% ammonia. The viscosity is then increased by adding standard HASE and/or HEUR thickener to viscosity of about 1,000 cps as measured with an LVT Brookfield viscometer (#3, 30 rpm). In CE2 an additional 10% w/w TACOLYN^{™} 1070 tackifier, available from Eastman, is added during formulation. The emulsions are then coated onto RP-12 release liner, available from Chemsultants, dried at 80°C for 5 minutes, and then laminated to a semi-gloss paper face stock (unless otherwise specified), padded, and then stored at about 23°F at 50% relative humidity for at least 24 hours prior to any testing.

The obtained emulsions have approximately 60 percent by weight solids and a glass transition temperature of about -50°C. The final emulsions have a bimodal particle size distribution, with approximately 5 to 15 percent by weight of the total polymer in the emulsions present in particles having a weight average diameter of 80 to 100 nm, the remainder of the polymer being present in particles having a weight average diameter of 350 to 450 nm.

### Application Tests

Adhesion performance is measured according to standard industrial methods (Test Methods for Pressure Sensitive Tapes, 16^{th} edition, Pressure Sensitive Tape Council). Stainless steel shear is measured in a 1" x 1" x 1 kg configuration, according to PSTC test method #107. Stainless steel peels are measured according to PSTC test method #101. 180° peels are measured at 12"/min. Measurements are made in a constant temperature room held within the specifications set by the PSTC test methods. Cold temperature testing is performed within an environmental chamber set at the specified temperatures. HDPE and stainless steel panels for all testing are obtained from Chemsultants. Commercially available polyethylene film substrate is prepared by taping the film to a stainless steel panel with a double sided tape. Cardboard panels are cut from standard cardboard boxes made with 0% recycled content.

Failure modes ("FM") for the Examples use the following abbreviations: "A" indicating adhesive failure, "C" indicating cohesive failure, "SS" indicating slip stick failure, "S1." indicating the modifier "slight," "FT" indicating fiber tear or pulling fibers off cardboard, and "PT" indicating paper tear. For the peel and loop tack tests, a performance difference greater than 0.5 N is considered significant. Further, a minimum 1 hour shear is desirable.

**Table 2: Performance Tests for IE1 and CE1**

| | | | | CE1 | SD | IE1 | SD |
|---|---|---|---|---|---|---|---|
| Coated paper | RT | 90° Peel, 1 min dwell | HDPE | 3.0 | 0.1 | 3.4 | 0.3 |
| | | | SS | 11.9 | 0.4 | 12.0 | 0.5 |
| | | | CB | 10.1 | 0.4 | 10.4 | 0.3 |
| | | Loop Tack | HDPE | 6.6 | 0.3 | 7.2 | 0.2 |
| | | | SS | 12.2 | 0.2 | 13.7 | 0.1 |
| | | | CB | 11.7 | 0.2 | 12.4 | 0.1 |
| | | Shear | SS | 12.4 | 0.1 | 2.8 | 0.2 |
| | Low Temp. - 15°C | 90° Peel, 1 min dwell | HDPE | 1.0 | 0.1 | 0.8 | 0.0 |
| | | | SS | 4.1 | 0.2 | 3.7 | 0.3 |
| | | | CB | 5.3 | 0.3 | 6.2 | 0.4 |
| | | Loop Tack | HDPE | 1.9 | 0.4 | 1.7 | 0.2 |
| | | | SS | 17.0 | 0.4 | 16.6 | 0.1 |
| | | | CB | 9.0 | 0.2 | 8.8 | 0.4 |
| Direct Thermal Paper | RT | 90° Peel, 1 min dwell | HDPE | 3.0 | 0.2 | 3.0 | 0.2 |
| | | | SS | 10.2 | 0.2 | 11.1 | 0.5 |
| | | | CB | 9.2 | 0.2 | 9.7 | 0.4 |
| | | Loop Tack | HDPE | 6.9 | 0.4 | 7.6 | 0.5 |
| | | | SS | 12.5 | 0.3 | 12.5 | 0.4 |
| | | | CB | 12.6 | 0.4 | 12.3 | 0.3 |
| | | Shear | SS | 11.5 | 0.3 | 3.6 | 0.3 |
| | Low Temp. - 15°C | 90° Peel, 1 min dwell | HDPE | 0.8 | 0.1 | 0.7 | 0.0 |
| | | | SS | 3.5 | 0.1 | 3.0 | 0.3 |
| | | | CB | 5.9 | 0.3 | 7.3 | 0.2 |
| | | Loop Tack | HDPE | 1.9 | 0.5 | 2.4 | 0.5 |
| | | | SS | 8.1 | 0.2 | 10.7 | 0.2 |
| | | | CB | 8.8 | 0.9 | 8.2 | 0.4 |
| PET film | RT | 90° Peel, 1 min dwell | HDPE | 2.0 | 0.1 | 2.6 | 0.3 |
| | | | SS | 10.6 | 0.3 | 12.0 | 0.4 |
| | | | CB | 10.6 | 0.1 | 10.8 | 0.4 |
| | | Loop Tack | HDPE | 6.3 | 0.4 | 6.4 | 0.5 |
| | | | SS | 12.6 | 0.5 | 14.0 | 0.3 |
| | | | CB | 13.6 | 0.4 | 15.5 | 0.5 |
| | | Shear | SS | 4.9 | 0.4 | 2.3 | 0.1 |
| | | | HDPE | 0.5 | 0.1 | 0.5 | 0.0 |
| | Low Temp. - 15°C | 90° Peel, 1 min dwell | SS | 1.4 | 0.1 | 1.9 | 0.1 |
| | | | CB | 4.5 | 0.1 | 5.0 | 0.2 |
| | | Loop Tack | HDPE | 1.6 | 0.4 | 1.5 | 0.5 |
| | | | SS | 3.5 | 0.3 | 10.8 | 0.4 |
| | | | CB | 4.3 | 0.4 | 8.1 | 0.3 |

As indicated in Table 2, IE1 shows a significant improvement in adhesion over CE1 on multiple facestocks (coated paper, direct thermal paper and PET) without compromising the cohesive strength. Failure modes between IE1 and CE1 are same for each test.

**Table 3: Performance Tests for IE1 to IE3 and CE1**

| | | 90° Peel @ 10min dwell- Newton | | | | 73.1°F / 50.3%RH | | |
|---|---|---|---|---|---|---|---|---|
| | 90° Peel -HDPE | | 90° Peel - SS | | 90° Peel - CB | | 90° Peel-GLAD (PE FILM) | |
| Sample ID (acid content, wt%) | FM | Avg | FM | Avg | FM | Avg | FM | Avg |
| IE1 (0.5%) | A | 4.0 | A sl. C | 11.9 | A/C | 9.3 | A | 4.6 |
| CE1 (1%) | A | 3.4 | A sl. C | 11.2 | A/C | 8.8 | A | 4.0 |
| IE2 (0.4%) | A | 4.4 | C | 12.8 | A/C | 8.8 | A | 5.0 |
| IE3 (0.6%) | A | 3.6 | A sl. C | 11.7 | A/C | 9.5 | A | 4.6 |

| | Loop Tack - HDPE | | Loop Tack - SS | | Loop Tack - STA/CB | | Loop Tack - GLAD | |
|---|---|---|---|---|---|---|---|---|
| Sample ID | FM | Avg | FM | Avg | FM | Avg | FM | Avg |
| IE1 (0.5%) | A | 7.3 | A | 13.9 | A sl. C | 11.8 | A | 7.4 |
| CE1 (1%) | A | 7.2 | A | 12.6 | A sl. C | 10.9 | A | 7.0 |
| IE2 (0.4%) | A | 7.9 | A s1. C | 17.0 | A s1. C | 13.3 | A | 8.2 |
| IE3 (0.6%) | A | 7.1 | A | 14.0 | A sl. C | 11.3 | A | 7.3 |

| | Shear - SS - Hours | | | | | | | |
|---|---|---|---|---|---|---|---|---|
| Sample ID | FM | Avg | | | | | | |
| IE1 (0.5%) | C | 5.0 | | | | | | |
| CE1 (1%) | C | 5.1 | | | | | | |
| IE2 (0.4%) | C | 1.0 | | | | | | |
| IE3 (0.6%) | C | 6.2 | | | | | | |

As indicated in Table 3, IE1, IE2 and IE3 show improved room temperature adhesion over CE1.

**Table 4: Performance Tests for IE1 to IE3 and CE1**

| -5°C | 90° Peel - HDPE | | 90° Peel - STA/CB | | 90° Peel - GLAD | |
|---|---|---|---|---|---|---|
| Sample ID | FM | Avg | FM | Avg | FM | Avg |
| IE1 | A/SS | 3.1 | A sl. FT | 6.5 | A/SS | 1.3 |
| CE1 | A/SS | 2.9 | A sl. FT | 5.4 | A/SS | 1.2 |
| IE2 | A/SS | 3.0 | A sl. FT | 6.3 | A/SS | 1.5 |
| IE3 | A/SS | 3.0 | A sl. FT | 5.9 | A/SS | 1.3 |
| | | | | | | |

| | Loop Tack - HDPE | | Loop Tack - STA/CB | | Loop Tack -GLAD | |
|---|---|---|---|---|---|---|
| Sample ID | FM | Avg | FM | Avg | FM | Avg |
| IE1 | A/SS | 8.1 | A sl. FT | 11.5 | A/SS | 4.8 |
| CE1 | A/SS | 7.9 | A sl. FT | 10.8 | A/SS | 3.3 |
| IE2 | A/SS | 7.3 | A sl. FT | 12.3 | A/SS | 5.5 |
| IE3 | A/SS | 7.8 | A sl. FT | 10.6 | A/SS | 4.7 |

As indicated in Table 4, IE1 and IE2 show improved adhesion over CE1 at low temperature (refrigerator grade, -5°C).

**Table 5: Performance Tests for IE1 to IE3 and CE1**

| -20°C | 90° Peel - HDPE | | 90° Peel - STA/CB | | 90° Peel - GLAD | |
|---|---|---|---|---|---|---|
| Sample ID | FM | Avg | FM | Avg | FM | Avg |
| IE1 | A/SS | 0.60 | A/FT | 4.59 | A/SS | 0.92 |
| CE1 | A/SS | 0.51 | A sl. SS/FT | 3.81 | A/SS | 0.91 |
| IE2 | A/SS | 0.47 | A sl. SS/FT | 3.90 | A/SS | 1.13 |
| IE3 | A/SS | 0.61 | A sl. SS/FT | 4.01 | A/SS | 1.22 |
| | | | | | | |

| | Loop Tack - HDPE | | Loop Tack - STA/CB | | Loop Tack -GLAD | |
|---|---|---|---|---|---|---|
| Sample ID | FM | Avg | FM | Avg | FM | Avg |
| IE1 | A/SS | 1.50 | A sl. SS | 6.53 | A/SS | 2.37 |
| CE1 | A/SS | 0.97 | A sl. SS | 4.60 | A/SS | 1.50 |
| IE2 | A/SS | 1.37 | A | 7.77 | A/SS | 1.90 |
| IE3 | A/SS | 1.67 | A sl. SS | 6.07 | A/SS | 1.43 |

As indicated in Table 5, IE1 and IE2 show improved adhesion over CE1 at low temperature (freezer grade, -20°C).

**Table 6: Performance Tests for IE1 and CE2**

| | | IE1 (0.5% acid) | CE2 (1% acid) + 10% Tackifier |
|---|---|---|---|
| 90° Peel RT | HDPE (A) | 4.2 | 3.8 |
| | SS | 12.9 A | 9.6 A sl.C |
| | CB (A/C) | 8.0 | 7.6 |
| Loop tack RT | HDPE (A) | 8.6 | 7.5 |
| | SS (A) | 16.5 | 11.0 |
| | CB (A) | 10.4 | 11.6 |
| 90° Peel -5C | HDPE (A/SS) | 5.7 | 7.2 |
| | SS | PT | PT |
| | CB (A/FT) | FT | 8.2 |
| Loop tack -5C | HDPE | 11.1 A/SS | 14.8 A |
| | SS | 20.3 A | 22.5 A/PT |
| | CB (A/FT) | 16.6 | 16.7 |
| 90° Peel -20C | HDPE | 6.3A | 3.8 A/SS |
| | SS | PT | PT |
| | CB | A/FT PT | A/FT PT |
| Loop tack -20C | HDPE (A/SS) | 2.1 | 1.8 |
| | SS (A/SS) | 13.1 | 9.3 |
| | CB (A/sl.FT) | 13.0 | 8.1 |
| RT, SS | Shear | 6.8 | 24.3 |

As indicated in Table 6, IE1 shows overall improved adhesion over CE2 at both room as well as low temperature. PT or FT are desirable failure modes.

## Claims

1. A pressure sensitive adhesive composition, comprising:
an acrylic copolymer formed from a monomer mixture comprising, based on the total weight of monomers in the monomer mixture:
(a) from 60 to 80 percent by weight 2-ethylhexyl acrylate;
(b) from 10 to 30 percent by weight butyl acrylate;
(c) from 3 to 7 percent by weight methyl methacrylate;
(d) from 0.1 to 3 percent by weight styrene;
(e) from 0.1 to 1 percent by weight (meth)acrylic acid,
wherein the acrylic copolymer has an acid content of less than 1 percent by weight, based on the total weight of the monomers in the monomer mixture.

2. The pressure sensitive adhesive composition of claim 1, wherein the composition does not comprise ethyl acrylate, vinyl acetate, or α-methyl styrene.

3. The pressure sensitive adhesive composition of claim 1, wherein the composition does not comprise a crosslinking agent.

4. The pressure sensitive adhesive composition of claim 1, further comprising an acid selected from the group consisting of methacrylic acid, itaconic acid, maleic acid, carboxylic acid, and combinations thereof.

5. The pressure sensitive adhesive composition of claim 1, wherein the glass transition temperature of the acrylic copolymer is from -55 to -45°C as measured by differential scanning calorimeter with heating rate of 10°C/min.

6. A method for preparing a pressure sensitive adhesive composition, comprising:
preparing a monomer emulsion by dispersing a monomer mixture and a surfactant in an aqueous medium, the monomer mixture, based on the total weight of monomers in the monomer mixture, (a) from 60 to 80 percent by weight 2-ethylhexyl acrylate, (b) from 10 to 30 percent by weight butyl acrylate, (c) from 3 to 7 percent by weight methyl methacrylate, (d) from 0.1 to 3 percent by weight styrene, and (e) from 0.1 to 1 percent by weight (meth)acrylic acid; and
introducing an initiator to the monomer emulsion, thereby polymerizing the monomer mixture to form an acrylic copolymer suitable for use in a pressure sensitive adhesive composition,
wherein the acrylic copolymer has an acid content of less than 1 percent by weight, based on the total weight of the monomers in the monomer mixture.

## Patentansprüche

1. Druckempfindliche Klebstoffzusammensetzung, umfassend:
ein Acrylcopolymer, das aus einer Monomermischung ausgebildet ist, umfassend, basierend auf dem Gesamtgewicht von Monomeren in der Monomermischung:
(a) von 60 bis 80 Gewichtsprozent 2-Ethylhexylacrylat;
(b) von 10 bis 30 Gewichtsprozent Butylacrylat;
(c) von 3 bis 7 Gewichtsprozent Methylmethacrylat;
(d) von 0,1 bis 3 Gewichtsprozent Styrol;
(e) von 0,1 bis 1 Gewichtsprozent (Meth)acrylsäure,
wobei das Acrylcopolymer einen Säuregehalt von weniger als 1 Gewichtsprozent aufweist, basierend auf dem Gesamtgewicht der Monomere in der Monomermischung.

2. Druckempfindliche Klebstoffzusammensetzung nach Anspruch 1, wobei die Zusammensetzung kein Ethylacrylat, Vinylacetat oder α-Methylstyrol umfasst.

3. Druckempfindliche Klebstoffzusammensetzung nach Anspruch 1, wobei die Zusammensetzung kein Vernetzungsmittel umfasst.

4. Druckempfindliche Klebstoffzusammensetzung nach Anspruch 1, ferner umfassend eine Säure, die aus der Gruppe ausgewählt ist, bestehend aus Methacrylsäure, Itaconsäure, Maleinsäure, Carbonsäure und Kombinationen davon.

5. Druckempfindliche Klebstoffzusammensetzung nach Anspruch 1, wobei die Glasübergangstemperatur des Acrylcopolymers von -55 bis -45 °C beträgt, wie durch einen Differential-Raster-Kalorimeter mit einer Heizrate von 10 °C/min gemessen.

6. Verfahren zum Herstellen einer druckempfindlichen Klebstoffzusammensetzung, umfassend:
Herstellen einer Monomeremulsion durch Dispergieren einer Monomermischung und eines Tensids in einem wässrigen Medium, der Monomermischung, basierend auf dem Gesamtgewicht von Monomeren in der Monomermischung, (a) von 60 bis 80 Gewichtsprozent 2- Ethylhexylacrylat, (b) von 10 bis 30 Gewichtsprozent Butylacrylat, (c)
von 3 bis 7 Gewichtsprozent Methylmethacrylat, (d) von 0,1 bis 3 Gewichtsprozent Styrol und (e) von 0,1 bis 1 Gewichtsprozent (Meth)acrylsäure; und
Einführen eines Initiators zu der Monomeremulsion, wobei dadurch die Monomermischung polymerisiert wird, um ein Acrylcopolymer auszubilden, das zur Verwendung in einer druckempfindlichen Klebstoffzusammensetzung geeignet ist,
wobei das Acrylcopolymer einen Säuregehalt von weniger als 1 Gewichtsprozent aufweist, basierend auf dem Gesamtgewicht der Monomere in der Monomermischung.

## Revendications

1. Composition d'adhésif sensible à la pression, comprenant :
un copolymère acrylique formé à partir d'un mélange de monomères comprenant, sur la base du poids total des monomères dans le mélange de monomères :
(a) de 60 à 80 pour cent en poids d'acrylate de 2-éthylhexyle ;
(b) de 10 à 30 pour cent en poids d'acrylate de butyle ;
(c) de 3 à 7 pour cent en poids de méthacrylate de méthyle ;
(d) de 0,1 à 3 pour cent en poids de styrène ;
(e) de 0,1 à 1 pour cent en poids d'acide (méth)acrylique,
dans laquelle le copolymère acrylique a une teneur en acide inférieure à 1 pour cent en poids, sur la base du poids total des monomères dans le mélange de monomères.

2. Composition d'adhésif sensible à la pression selon la revendication 1, dans laquelle la composition ne comprend pas d'acrylate d'éthyle, d'acétate de vinyle, ou d'a-méthylstyrène.

3. Composition d'adhésif sensible à la pression selon la revendication 1, dans laquelle la composition ne comprend pas d'agent de réticulation.

4. Composition d'adhésif sensible à la pression selon la revendication 1, comprenant en outre un acide choisi dans le groupe constitué d'acide méthacrylique, acide itaconique, acide maléique, acide carboxylique, et combinaisons de ceux-ci.

5. Composition d'adhésif sensible à la pression selon la revendication 1, dans laquelle la température de transition vitreuse du copolymère acrylique va de - 55 à -45 °C telle que mesurée par calorimètre différentiel à balayage avec une vitesse de chauffage de 10 °C/min.

6. Procédé de préparation d'une composition d'adhésif sensible à la pression, comprenant :
la préparation d'une émulsion de monomères en dispersant un mélange de monomères et un agent tensioactif dans un milieu aqueux, le mélange de monomères, sur la base du poids total des monomères dans le mélange de monomères, (a) de 60 à 80 pour cent en poids d'acrylate de 2-éthylhexyle, (b) de 10 à 30 pour cent en poids d'acrylate de butyle, (c)
de 3 à 7 pour cent en poids de méthacrylate de méthyle, (d) de 0,1 à 3 pour cent en poids de styrène, et (e) de 0,1 à 1 pour cent en poids d'acide (méth)acrylique ; et
l'introduction d'un initiateur à l'émulsion de monomères, ce qui polymérise le mélange de monomères pour former un copolymère acrylique approprié pour utilisation dans une composition d'adhésif sensible à la pression,
dans lequel le copolymère acrylique a une teneur en acide inférieure à 1 pour cent en poids, sur la base du poids total des monomères dans le mélange de monomères.
